# EUROPEAN PATENT SPECIFICATION

(11) **EP 0 390 364 B1**
(45) Date of publication and mention of the grant of the patent: **18.09.1996**
(21) Application number: 90302699.5
(22) Date of filing: 14.03.1990
(51) Int. Cl.: H04N 1/21, H04N 1/387, H04N 1/00, H04N 1/38

(54) **Image reading devices**
Bildlesegeräte
Dispositifs de lecture d'images

(30) Priority: 31.03.1989 JP 83696/89; 31.03.1989 JP 83697/89; 01.04.1989 JP 83330/89
(43) Date of publication of application: 03.10.1990
(73) Proprietor: SONY CORPORATION, Tokyo 141 (JP)
(72) Inventor: Suzuki, Kiyosuke, c/o Patents Division, Shinagawa-ku, Tokyo 141 (JP); Wanami, Hideki, c/o Patents Division, Shinagawa-ku, Tokyo 141 (JP); Shirata, Atsushi, c/o Patents Division, Shinagawa-ku, Tokyo 141 (JP); Koyama, Noboru, c/o Patents Division, Shinagawa-ku, Tokyo 141 (JP); Sato, Tatsuru, c/o Patents Division, Shinagawa-ku, Tokyo 141 (JP)
(74) Representative: Harris, Ian Richard

(56) References cited:
- EP-A- 0 285 447
- DE-A- 3 134 705
- DE-A- 3 149 892
- US-A- 3 749 836
- US-A- 4 635 108
- US-A- 4 656 524
- US-A- 4 772 941
- PROCEEDINGS OF THE 1982 INTERNATIONAL ZURICH SEMINAR ON DIGITAL COMMUNICATIONS, 9th-11th March 1982, Zurich, IEEE Cat. no. 82CH1735-0, pages 93-100, CH; W. HORAK: "Experimental text and facsimile integrated workstation"

## Description

This invention relates to image reading devices, and, more particularly, to scanning apparatus for reading an image to produce outputs which may, for example, be supplied to a monitor receiver, video printer or video tape recorder (VTR).

In a previously proposed image reading device, an original is scanned and read, using a line sensor, that is a one-dimensional or linear array of charge coupled devices (CCDs), and the read image signals are converted by an analogue-to-digital (A/D) converter into digital video signals, which are then supplied via a digital interface, such as GPLB, RS232C or SCSI, into a large capacity memory in computer for storage. When the stored image data are to be displayed on a monitor receiver or printed by a video printer, various signal processing operations are performed on the video data by a computer, before the display or printing data are transmitted to the monitor receiver or video printer.

Therefore, when the video data read by the video reading device are simply displayed on the monitor receiver or printed on the video printer, a computer or the like processing device is required. Moreover, transmission of the data read from the video reading device to the processing device is a time-consuming operation, so there is delay before the read original is displayed on the monitor receiver.

In such an image reading device, if the enlargement ratio, when a picture original of A4 size is read and displayed on the full size screen of a display device, such as a cathode ray tube (CRT) monitor, is set to a standard enlargement ratio of unity, an A5 to A6 region in the original, for example, can be displayed on the full-size screen of the display screen by changing this enlargement ratio.

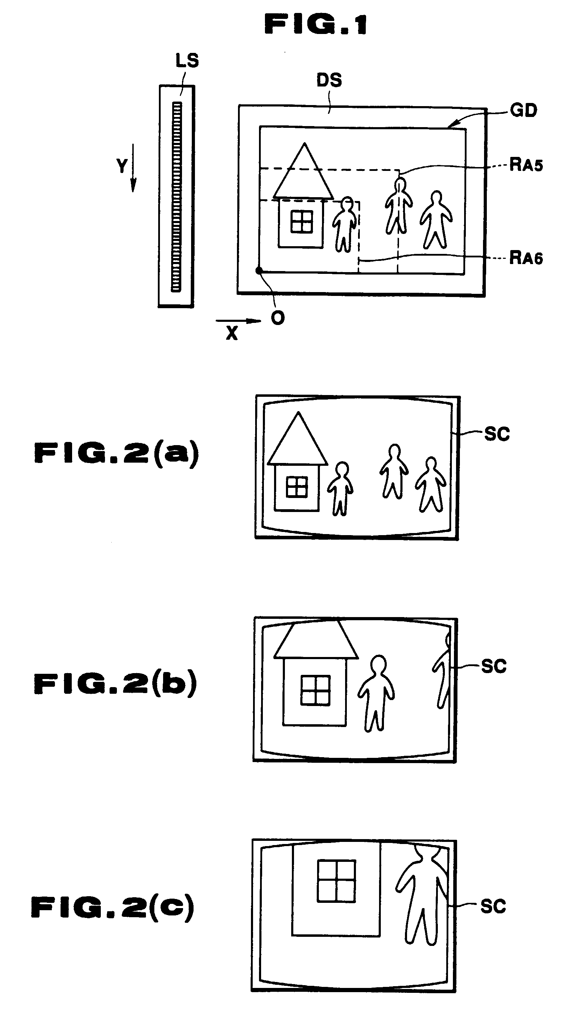

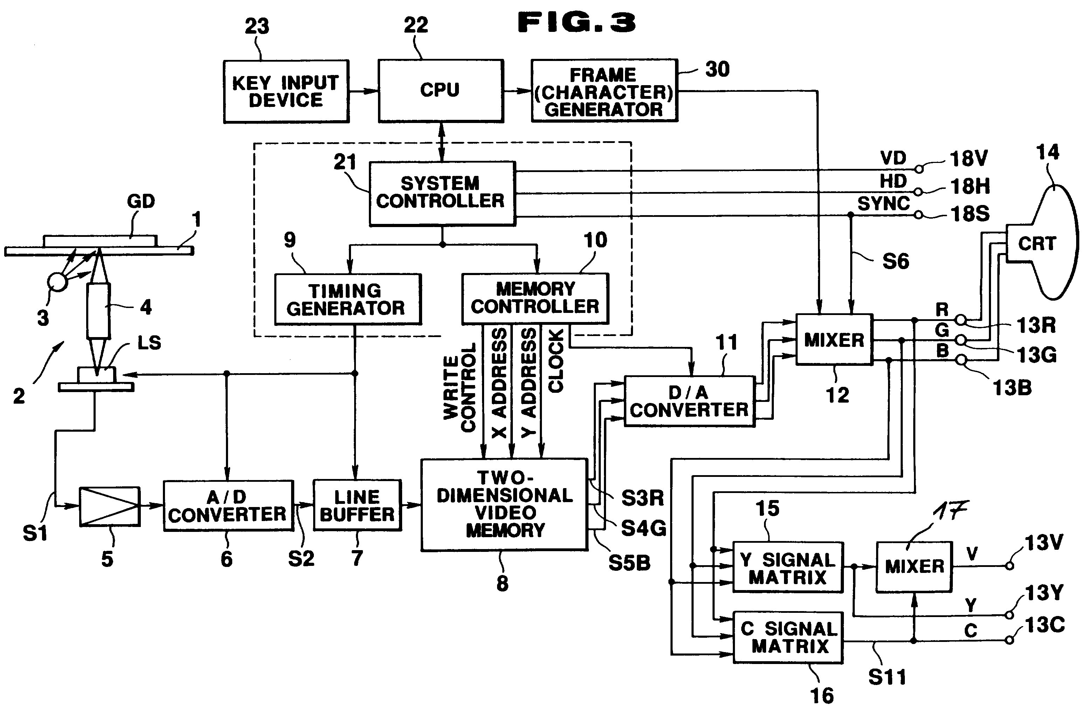

It is now assumed that, as shown in Figure 1, a picture original GD of a predetermined format is placed on an original table DS of the image reading device, so that the lower left corner of the original GD coincides with the origin 0 of the table DS, the original GD is read by relative movement of a line sensor in the sub-scanning direction X with respect to the original GD, and the thus read video data are displayed on a display apparatus, such as a CRT monitor. In such a case, if the enlargement ratio of the image reading device is switched to, for example, 1, 2 and 4, displays SC are produced on the display device, as shown in Figures 2(a), 2(b) and 2(c), respectively.

With the size of the original GD of Figure 2 of, for example, A4, the overall A4 format of the original GD is read when the enlargement ratio is to result in the display SC of Figure 2(a). When the enlargement ratio is 2, a region RA5 (A5) of similar shape, but half the area of the original GD, with the origin 0 as the lower left corner, is read to result in the full-size display SC of Figure 2(b). When the enlargement ratio is 4, a region RA6 (A6) of similar shape, but one-fourth of the area of the original GD, with the origin 0 as the lower left corner is read to result in the full-size display SC of Figure 2(c).

With the above-described image reading device, a plurality of regions having sizes corresponding to different enlargement ratios are preset, to form the image reading range, with the origin 0 of the table DS as the lower left corner. Since the original GD is read while placed in the reversed position on the table DS, it may not be appreciated, until reaching the end of reading, what portion of the original GD is being read. Also, since the image reading range on the table DS is determined in dependence upon the selected enlargement ratio, it is not possible to read an arbitrarily selected portion of the original GD to display it after enlargement to full-size.

In the field of duplicators, a technique is known in which the contraction or enlargement ratio of a duplicator is set automatically (Japanese Patent Publication JP-B-57/68868). This device automatically sets the contraction and enlargement ratio for original documents of different sizes, but is not an image reading device in which the read image is directly displayed on a display device, and nor does it read only a portion of the image for display on an enlarged scale.

US Patent US-A-4,772,941 describes a video display system for proofing photographic images without the need to wait for prints to be made. This patent describes the masking of the edges of an image with a selectable border frame image.

According to the present invention there is provided a scanning apparatus for reading an image, the apparatus comprising: a scanning sensor for reading an image of an original; an analogue-to-digital converter for converting said image from analogue image data into digital image data; memory means for storing said digital image data; a memory controller for generating address signals for storing said digital image data in said memory means; control means, including said memory controller, for controlling the reading frequency from said memory means so as to be equal to a scanning frequency of a television signal; a digital-to-analogue converter for converting said digital image data into an original image signal for display as a television image; a frame display signal generator for generating a frame display signal; mixing means for mixing said original image signal with said frame display signal; output terminal means for outputting the mixed signal from said mixing means as a display image signal; and user input means for inputting data to said control means, characterised in that: said frame display signal generator is responsive to position and enlargement ratio data input from said user input means to said control means for generating a said frame display signal framing a user selected reading range of said original; and said control means is responsive to said position and enlargement ratio data to control driving means for driving said scanning sensor to rescan the thus selected reading range of said original to generate a new image corresponding to said selected reading range; whereby said rescanned area of said original image signal framed by said frame display signal is magnified and displayed on the whole of the display area of display means.

An embodiment of image reading device according to the present invention comprises image reading means, an image memory for recording the read image data, and control means for controlling the reading frequency at the time of repeatedly reading the video data recorded on the video memory, so as to be equal to the scanning frequency of a television signal. It is possible with this arrangement to convert the image read by the line sensor into video signals by a simple operation and repeatedly to supply the video signals to a monitor receiver, video printer or VTR, while it is also possible to display the image read by the line sensor directly on a monitor receiver in a short time or print or record the read image by a video printer or VTR.

The image data read from the picture original by the image reading means are fetched into said image memory, and the video data read from the image memory mixed with an output signal from said frame display signal generator to produce a display signal, while said scanning sensor is controlled by said driving means so that rereading may be made within the range determined by said frame display signal. This enables an arbitrary reading range on the picture original to be displayed to determine the image reading range easily and reliably.

Said frame display signal generator can comprise a character generator which produces as said frame display signal a plurality of character patterns and thus results in a simple and reliable construction.

The invention will now be described by way of example with reference to the accompanying drawings, throughout which like parts are referred to by like references, and in which:
Figure 1 is a diagrammatic plan view showing the reading range of a picture original placed on an original table;
Figure 2 shows diagrammatic views of specific examples of the display forms on a display screen;
Figure 3 is a block circuit diagram of an embodiment of image reading device according to the present invention;
Figure 4 is a diagrammatic view for illustrating the relation between a one-dimensional line sensor and the original;
Figures 5 and 6 are diagrammatic views of a two-dimensional image memory;
Figure 7 is a block circuit diagram showing a specific example of a frame generator of the above embodiment;
Figure 8 is a diagrammatic plan view showing the relation between the picture original and the original table;
Figure 9 shows diagrammatic views of specific examples of display forms on a display screen;
Figure 10 is a block circuit diagram showing a specific example of peripherals of a character generator of the above embodiment; and
Figures 11 to 16 are diagrammatic views showing specific examples of display forms of the reading frame by the display table and the frame display character pattern.

In the embodiment of image reading device, shown in Figure 3, an image reading head 2 for reading a picture original GD, placed on a glass original table 1, comprises a light source 3, a multiple lens array 4 and a CCD line sensor LS. The light source 3 irradiates the original GD with light, and the light reflected from the original GD is received by the line sensor LS by way of the lens array 4. The line sensor LS comprises 1728 CCD light receiving cells arranged on a line. When reading a line of the original GD, the light source 2 sequentially emits light corresponding to the three primary colours R, G and B to produce three primary colour image signals in a line-sequential manner. The output from the line sensor LS of the reading head 2 is amplified by an amplifier 5 and transmitted to an A/D converter 6 for conversion into digital video data, which are then supplied, after time matching by a line buffer 7 such as a first-in-first-out (FIFO) memory, to a video memory 8, such as a random access memory (RAM) or dual port memory. The operation of the line sensor LS, the A/D converter 6 and the line buffer 7 is controlled by a timing control signal from a reading timing control signal generator 9, while the operation of the video memory 8 is controlled by a control signal from a memory control circuit 10.

The light from the light source 3 is reflected by the original GD placed on the table 1, and the reflected light is incident via the lens array 4 on the one-dimensional line sensor LS composed of a plurality of CCDs placed on a straight line. Thus an operation equivalent to original reading by a duplicator is performed. The output signal from the line sensor LS, referred to hereinafter as the pixel signal S1, is a three colour signal for each pixel, that is, a red (R) signal, a green (G) signal and a blue (B) signal, and is supplied to the amplifier 5 as line sequentially switched signals. The pixel signal S1 is amplified in the amplifier 5 and converted in the A/D converter 6 into digital signals in the sequence R, G and B. These digitized signals are referred to as video data S2.

The video data S2 are supplied to the two-dimensional video memory 8 by way of the line buffer 7, which is formed by, for example, a FIFO memory, and which adjusts the output timing of the A/D converter 6 and the writing timing into the two-dimensional video memory 8. The video data S2 supplied to the video memory 8 are recorded in predetermined memory cells by address signals supplied from the memory control circuit 10 as will be described subsequently.

From the video memory 8, the primary colour data corresponding to the three primary colours R, G and B are read and transmitted to a D/A converter 11, where they are converted into R, G and B analogue video signals, which are then transmitted to a mixer 12. In the mixer 12, frame display signals for determining the reading range are mixed into the analogue video signals. These frame indicating signals are generated by a combination of character patterns constituting the frame by a so-called character generator or a CRT controller (CRTC), as will be explained subsequently in detail. The R, G and B video signals from the mixer 12 are derived at output terminals 13R, 13G and 13B, and transmitted to a display device, such as a colour CRT monitor 14. The R, G and B signals from the mixer 12 are transmitted to a Y (luminance) signal matrix circuit 15 and to a C (chrominance) signal matrix circuit 16. The Y and C signals from the matrix circuits 15 and 16 are derived by way of output terminals 13Y and 13C, while being mixed in a mixer 17 into a composite video signal SV which is derived at an output terminal 13V.

The reading timing control signal generator 9 and the memory control circuit 10 are controlled by a system controller 21 which exchanges data or control signals with a central processing unit (CPU) 22. The system controller 21 and CPU 22 may be formed into one circuit. A key input signal for determining the image reading range or switching the enlargement ratio is supplied from a key input device 23 to the CPU 22, which is responsive thereto to control a frame display signal generator 30 to form a frame display signal for indicating an image reading range by reading out from a read-only memory (ROM) or by combining character patterns. The frame display signal from the frame generator 30 is supplied to the mixer 12 for mixing with the video data. The CPU 22 also controls the reading timing control signal generator 9 via the system controller 21 to re-read the thus determined image reading range in the picture original. When the character generator or CRT controller is used as the frame generator 30, this character generator is provided for displaying functions associated with various operations of the image reading device, and includes a character ROM in which alphabetical letter patterns, figure or numeral patterns and symbol patterns are stored. In addition, a frame indicating pattern is provided at a portion of the character generator.

From the system controller 21, horizontal sync signals HD, vertical sync signals VD and a composite sync signals SYNC, consisting of a mixture of these sync signals, are derived via output terminals 18H, 18V and 18S.

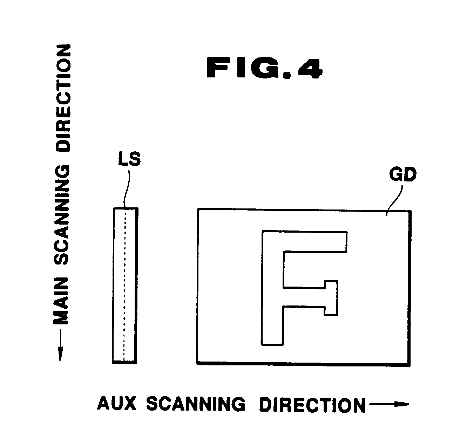

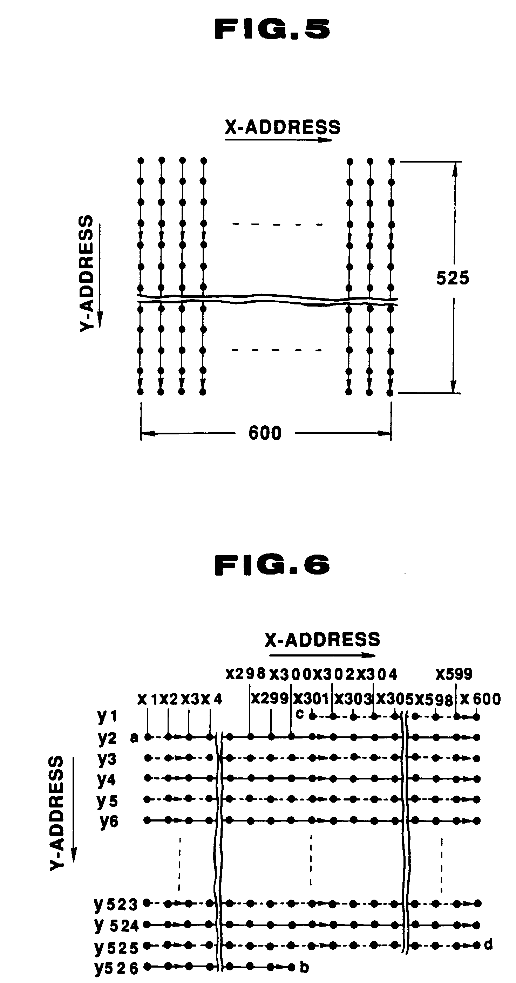

The relation between video data S2 read by way of the line sensor LS and the A/D converter 6, and video data recorded in the two-dimensional video memory 8 is explained by referring to Figures 4 and 5.

Figure 4 shows the relation between the original CD and the one-dimensional line sensor LS. The CCDs of the line sensor LS are arranged linearly in the vertical direction of the figure, and are moved from the left end to the right end of the original GD to sweep it in its entirety. That is, the scanning is composed of a scanning in the main scanning direction and a scanning in the auxiliary scanning direction. Figure 5 shows a memory map of the two-dimensional video memory 8. For the ensuing description, it is assumed that standard television signals (video signals) of the NTSC system are to be produced and that, as shown in Figure 5, the number of pixels of the two-dimensional video memory is 600 x 525, for example, the x-axis direction is the X-address direction and the y-axis direction is the Y-address direction.

Referring to Figure 5, writing video data S2 into the video memory 8 is performed in the following manner. The video data obtained by the main scanning at the left side end of the original GD are sequentially recorded in memory cells disposed on the straight line at the left-hand end of the memory in Figure 5, while the Y-address is incremented by one for each recording in the memory cell. When the video data S2 are recorded in all the memory cells disposed on the straight line at the left-hand side of the memory, the one-dimensional line sensor LS is shifted one pixel to the right and the X-address is incremented by one simultaneously. The video data obtained by the main scanning are then sequentially recorded in the memory cells on the line designated by the X-addresses, while the Y-address is incremented by one for each recording, in the same manner as described above. The recording operation of shifting the line sensor LS one pixel to the right at the same time that the X-address is incremented by one is continued until video data are recorded in all the memory cells of the video memory 8 to terminate the writing operation. Meanwhile, the driving of the line sensor LS and the controlling of the A/D converter 6 and the line buffer 7 are controlled by the reading timing control signal generator 9. The X and Y addresses are controlled by the memory control circuit 10. The organization of the video memory 8 may be realized, when the video data corresponding to the R, G and B signals are each formed by eight bits, for example, by a two-dimensional array of memory cells each of 24 bits per colour pixel. As an alternative organization, 8-bit memory cells may be arranged in a two-dimensional array, with three memory cells of the array being superimposed along its depth.

The video data S2 thus recorded in the video memory 8 are controlled by the memory control circuit 10 so as to be read by the X and Y addresses before being transmitted to the D/A converter 11.

The reading operation of the video memory 8 is explained by referring to Figure 6. In this figure, in distinction from the writing of the video data, data are read in association with television signals. That is, in keeping with interlaced scanning, video data of the even-numbered field are sequentially read in the X-address direction, that is in the direction shown by solid-line arrows in Figure 6, and the video data of the odd-numbered fields are sequentially read in the X-address direction, that is in the direction shown by broken-line arrows in Figure 6. Thus the reading of the video data from the two-dimensional video memory 8 is performed in the following manner.

The X-address and the Y-address are started at y2 and x1 (shown at a in Figure 6), respectively, to read the video data stored in the memory cell. Then, only the X-address is incremented by one sequentially, and the video data recorded in the memory cells designated by the addresses are read sequentially. The reading operation with the Y-address remaining at the same value y2 is continued until the X-address reaches x600. Upon termination of the reading of the video data of the X-address x600, the Y-address is incremented by two to y4 while the X-address is reset to x1. Reading of the video data, designated by x1 to x600 in the horizontal direction designated by the Y-address y4 is performed while only the X-addresses are sequentially incremented by one. The above described reading while incrementing the Y-address by two each time is continued until the Y-address reaches y526 and the X-address reaches x300 (a position b in Figure 6). When the reading of the video data for the Y-address y526 and the X-address x300 is terminated, the Y-address is set to y1, while the X-address is incremented by one to x301 (a position c in Figure 6) to perform reading of the video data. Then, only the X-address is sequentially incremented by one, and the video data recorded in the memory cells designated by these addresses are read. This reading operation is continued until the X-address reaches x600. The Y-address is incremented by two to y3, while the X-address is reset to x1, only the X-address is sequentially incremented by one and the video data, designated by x1 to x600, in the horizontal direction, designated by the Y-address y3, are read. The above described reading operation, while incrementing the Y-address by two, is continued until the Y-address reaches y525 and the X-address reaches x600 (a position d in Figure 6). After termination of reading of the picture data with the Y-address y525 and the X-address x600, the reading operation is again started at the above-mentioned start point to repeat the above sequence of the reading operations. The reading of the video data from the position a to the position b of Figure 6 represents the reading of the video data of the even-numbered field, while that of the video data from the position c to the position d represents the reading of the video data of the odd-numbered field, with the reading of an even-numbered field and an odd-numbered field constituting the reading of the video data corresponding to one frame. The numbers of pixels designated by the Y-address y1 and y526 are each 300 such that the number of pixels 600 x 525 of the two-dimensional video memory 8 suffices.

The above X and Y addresses are controlled by the memory controller 10, and the video data reading frequency is controlled so as to be matched to the scanning frequency of the NTSC system television signals. For example, the incrementing period of the Y-address by two and the one-field reading period may be set to 63.556µs (15.34 kHz) and 16.6834 ms (59.940 Hz), respectively, for conformity with the NTSC system.

On the other hand, the incrementing period of the Y-address by two and the one-field reading period may be set to 64µs (15.625 kHz) and 20 ms (50 Hz), respectively, for conformity with the PAL system. In this case, the memory cells in the Y-address direction should be designed to correspond to 625 pixels. If the number of the memory cells in the Y-address direction is insufficient to correspond with the 625 pixels, video data for the excess pixels should be blank signals. The incrementing period of the Y-address by two and the one-field reading period may also be set to 29.6296 µs (33.750 kHz) and 16.667 ms (60 Hz), respectively, for conformity with the high definition video standard.

The video data, video data S3 for red (R) signals, video data S4 for green (G) signals and video data S5 for blue (B) signals thus read are supplied to the D/A converter 11, as shown in Figure 3, for conversion into analogue signals. These analogue signals are mixed in the mixer 12 with composite sync signals S6 from the system controller 21 to form three primary colour signals, namely the read signal R, green signal G and blue signal B, mixed with sync signals. These colour signals are supplied to the output terminals 13R, 13G and 13B, the Y matrix 15, and the C matrix 16. In the Y matrix 15, luminance signal Y is generated from the signal R, G and B. The luminance signal Y is supplied to the mixer 17 and to the output terminal 13Y. In the C matrix 16, chrominance signal C is generated from the signals R, G and B. The chrominance signal C is supplied to the mixer 17 and to the output terminal 13C. In the mixer 17, the composite video signal V is generated from the luminance signal Y and chrominance signal C, so as to be supplied to the output terminal 13V. The R, G and B signals are supplied at the output terminals 13R, 13G and 13B, respectively, so as to be transmitted directly to, for example, a monitor receiver. The composite video signal V is supplied at the output terminal 13V, and the composite video signals are separated into Y and C components and supplied at the output terminals 13Y and 13C, before being transmitted to video equipment, such as a monitor receiver video printer or a VTR.

The reading timing control signal generator 9 and the memory controller 10 are controlled by the system controller 21. From the system controller 21, a so-called V sync signal VD, an H sync signal HD and a composite sync signal SYNC are produced at output terminals 18V, 18H and 18S, respectively.

In this manner, by providing a video memory in the video reading apparatus itself for recording video data read by the line sensor and by repeatedly reading the recorded video data at the same frequency as the scanning frequency of the television signal to transmit the video signals, it becomes possible to transmit video signals directly to various video equipment, such as a monitor receiver, a video printer or a VTR. Thus it becomes possible to display the read data directly on a monitor receiver in a short time, or print or record the data on a video printer or VTR, without necessitating a large capacity memory or computer for video data processing.

The present invention is not limited to the above embodiment and the reading period for each field may be 50 to 12.5 ms (20 Hz to 80 Hz).

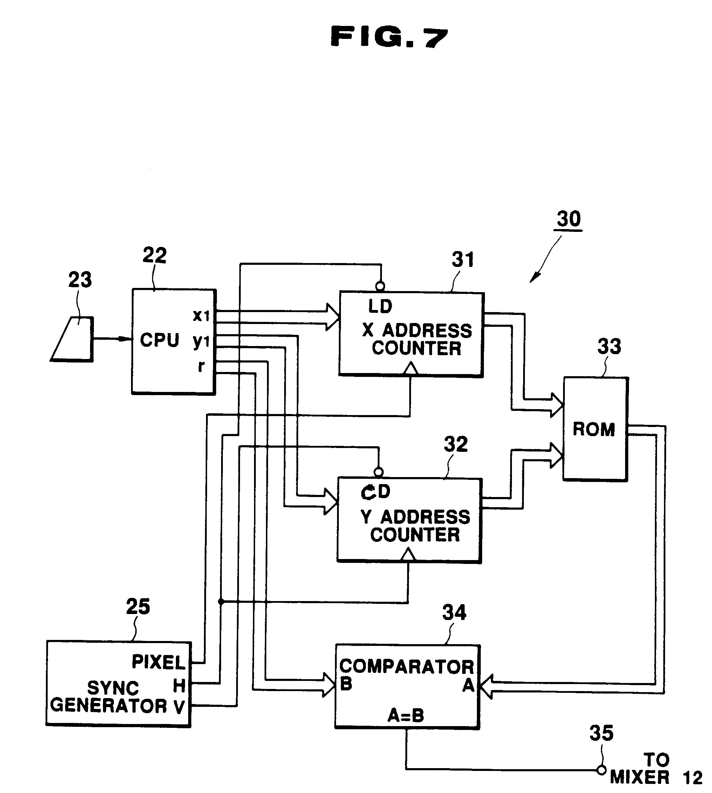

An example of a specific construction of the frame generator 30 is shown in Figure 7.

In this figure, with the key input signal from the key input device 23 being transmitted to the CPU 22, the CPU 22 supplies reading range determining frame display position data (X-coordinate x1 and Y-coordinate y1) and enlargement ratio designating data r, and transmits the data x1 to a data input terminal of an X-address counter 31, the data y1 to a Y-address counter 32, and the enlargement ratio designating data r to a comparator 34. Although the key input may be directly supplied to the coordinate data, it is also possible to determine the position while the frame is moved in the X-Y direction or in an oblique direction on the display screen using a cursor shift key. To the clock input terminal and the load control terminal LD of the X-address counter 31 are supplied pixel clocks and horizontal (H) sync signals from a sync generator 25 in the system controller 21. To the clock input terminal and the load control terminal CD of Y-address counter 32 are supplied H sync signals and V (vertical) sync signals from the sync generator 25. Count outputs from the counters 31 and 32 are supplied to X and Y address terminals of a ROM 33, respectively. Frame display data as shown for example in Table 1 are written in the ROM 33.

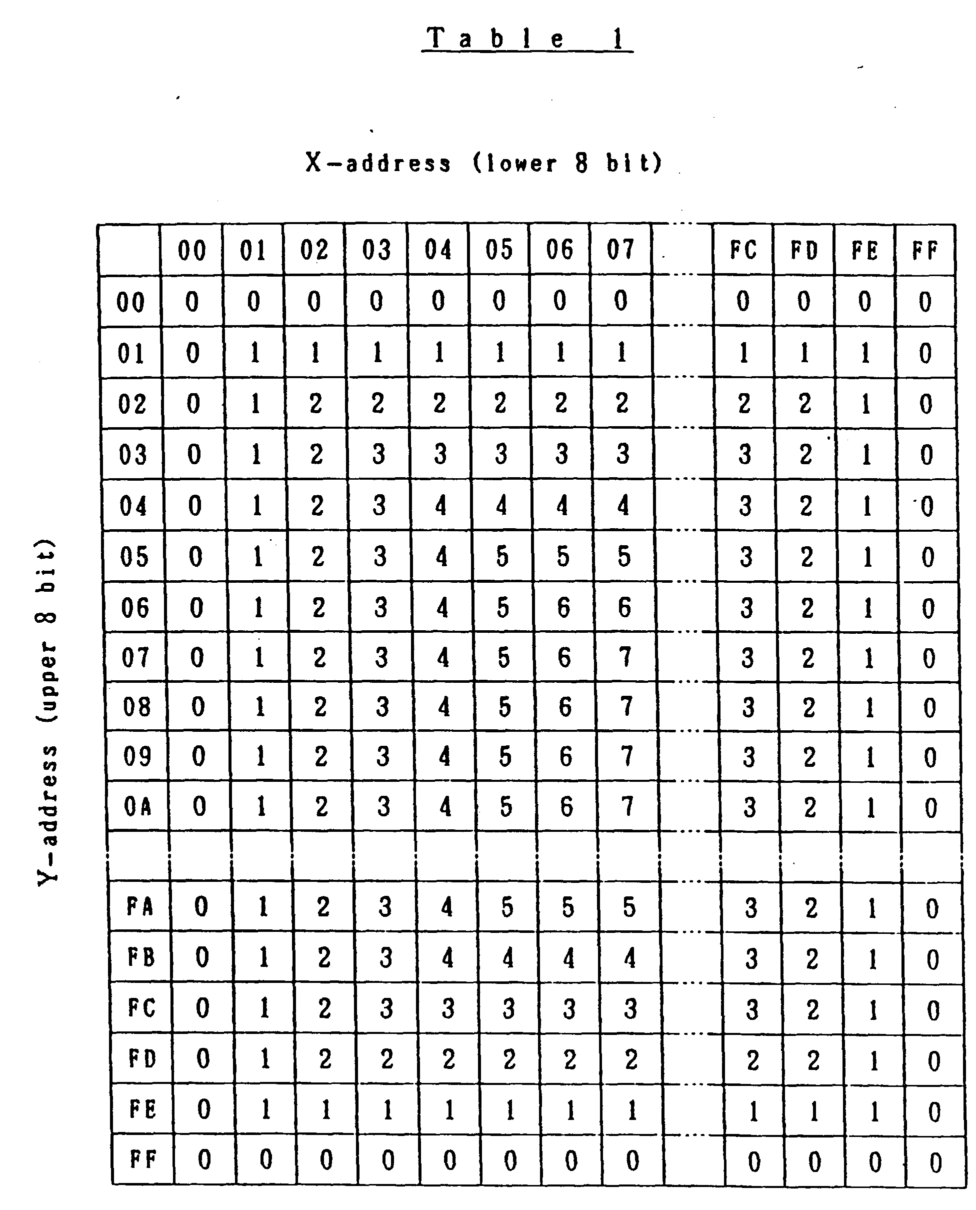

Output data from the ROM 33, into which these data are written are supplied to a comparison input terminal A of the comparator 34 for comparison with the enlargement ratio designating data r from the CPU 22 supplied to a comparison input terminal B. When input data from the terminals A and B are the same, (A=B), the comparator 34 generates a predetermined level output which is supplied via a terminal 35 to the mixer 12. The output from the terminal 35 represents the above-mentioned frame display signal.

As an example, when the X-coordinate x1 and the y-coordinate y1, which represent the frame display position data for determining the read range from the CPU 22 of Figure 7, are both zero, and the enlargement ratio designating data r is zero, the X-address counter 31 starts counting from zero each time the H sync signal is input, while the Y-address counter 32 starts counting from zero each time the V sync pulse is input. Thus the ROM data in Table 1 are supplied substantially in this form. Since the enlargement ratio designating data r is zero, the output of a predetermined level, such as white level, is supplied from the comparator 34 to the terminal 35 when the value of the ROM data of Table 1 is zero. Since this output signal is a signal which displays white level at the zero position of ROM data of Table 1, it is the white frame having the form corresponding to the "zero" portions of the ROM data of Table 1 that is displayed on the display screen. By switching the enlargement ratio designating data r to another value, such as four, the white frame having the shape corresponding to the "four" portions of ROM data of Table 1 is displayed, as a result of which the size of the display frame is modified. By changing the display position data x1, y1, the X-address count start value for each entry of the H sync pulse input and the Y-address count start value for each entry of the V sync pulse input are changed to modify the frame display position on the display screen.

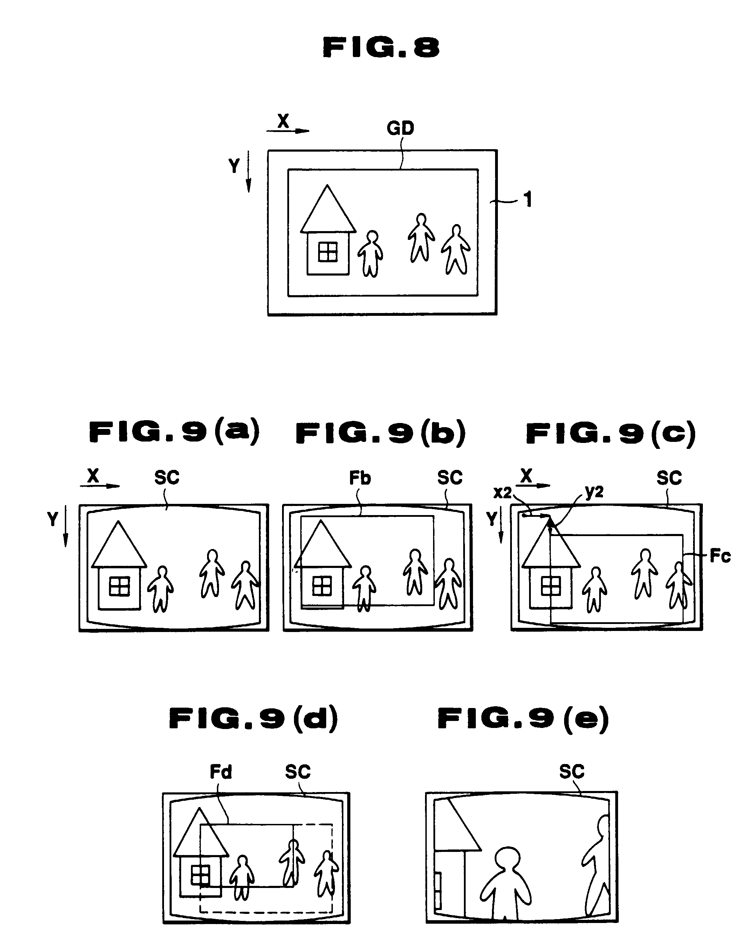

The above operation will be explained by referring to Figures 8 and 9.

Figure 8 shows the picture original GD of a predetermined format, such as A4, placed on the table 1. In the standard mode (enlargement ratio of 1), the overall surface of the original GD is fully displayed as shown in Figure 9(a). If a desired enlargement ratio is set in this state by a key input by the key input device 23 to select the frame display mode, a frame Fb shown in Figure 9(b) is displayed on the display SC. Then, by actuating a cursor shift key or joystick of the key input device 23, the display position data are changed, such that, as shown in Figure 9(c), a frame Fc which is shifted x2 in the X-direction or y2 in the Y-direction is displayed on the display SC. If a modified enlargement ratio is set by key entry, the frame format is changed as shown in Figure 9(d). After the reading range frame Fd has been determined by this sequence, the image reading operation is performed, in such a manner that the reading head 2 is controlled with respect to reading by means of the system controller 21 and the reading timing control signal generator 9 from the CPU 22 for re-reading the range indicated by the frame Fd in the original GD by the image reading head 2. As a result, the original portion within the range of the frame Fd shown in Figure 9(d) is again read and enlarged so as to be displayed fully on the display SC.

Considering that the line sensor LS has 1728 photocells, and the resolution in the Y or vertical direction of the ordinary CRT monitor is about 480 lines, the photocells may be put out of use at a rate of one of four cells when a full format (A4) original is to be displayed on the display screen. When the 1/4 size area is to be read and displayed to an enlarged scale, it may be read by the same line sensor LS with sufficient resolution. Taking into account the deterioration in resolution in the case of displaying only a partial region of video data read from the original and stored in the video memory, an obvious advantage may be derived from re-reading the video original itself.

With the above described embodiment, since the reading range determining frame F is displayed on the display SC, such as a CRT monitor, the read range for the original GD may be determined easily and reliably, while the position of the frame as well as the enlargement ratio is checked simultaneously.

By selecting a frame display colour other than white, and setting the condition of comparison at the comparator 34 to, for example, A < B, an output of a predetermined level is supplied from the comparator 34 within a range in which the value of the ROM data of Table 1 is not more than r. This output signal is at a predetermined level above the above-mentioned reading range, and may be mixed with the video data signal to display the range outside the reading range by a blank or half-tone display. With a blank display, the range outside the reading range is coloured in one predetermined colour, so that it becomes difficult to ascertain the position in the original. With a half-tone display, the range outside the reading range is displayed in light to dark or medium tone to facilitate recognition of the reading position in the original.

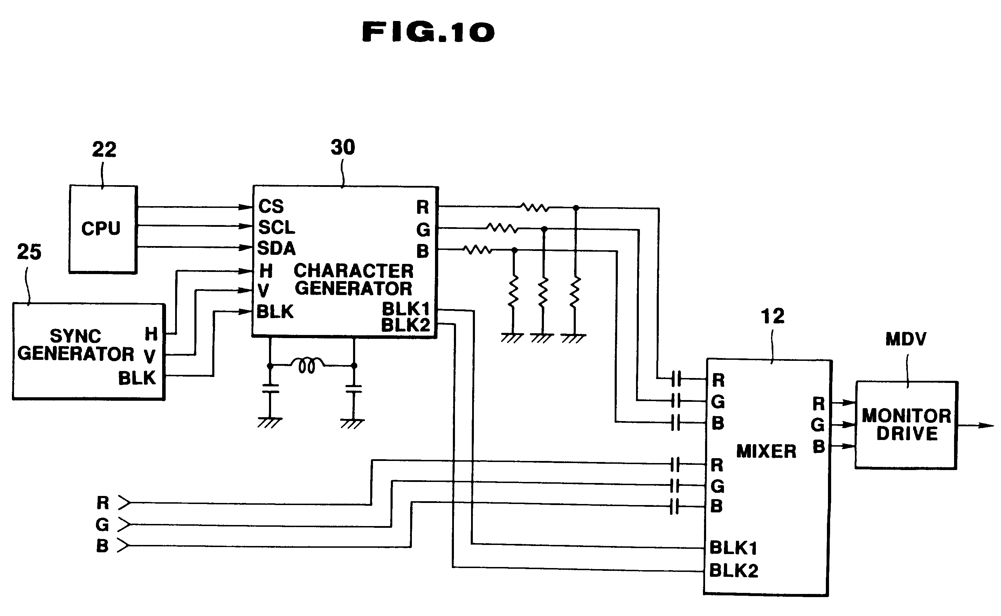

Figure 10 shows an example of a peripheral circuit when the character generator is used simultaneously as the frame generator 30 for generating the aforementioned frame display signal.

In Figure 10, an active signal (chip select signal) CS, a clock signal SCL and data signals SDA are transmitted from the CPU 22 to the character generator 30. Responsive to these signals, character patterns stored in a ROM of the character generator 30 are designated and read. This reading operation is controlled in timing in accordance with horizontal sync signal H, vertical sync signal V and blanking signal BLK so that R, G and B signals, for example, are derived and transmitted to the mixer 12. A superimposing integrated circuit (IC), for example, is used as the mixer 12, the output of which is mixed with video signals R, G and B read from the video memory 8 and transmitted by way of a monitor driving circuit MDV to the CRT monitor 14.

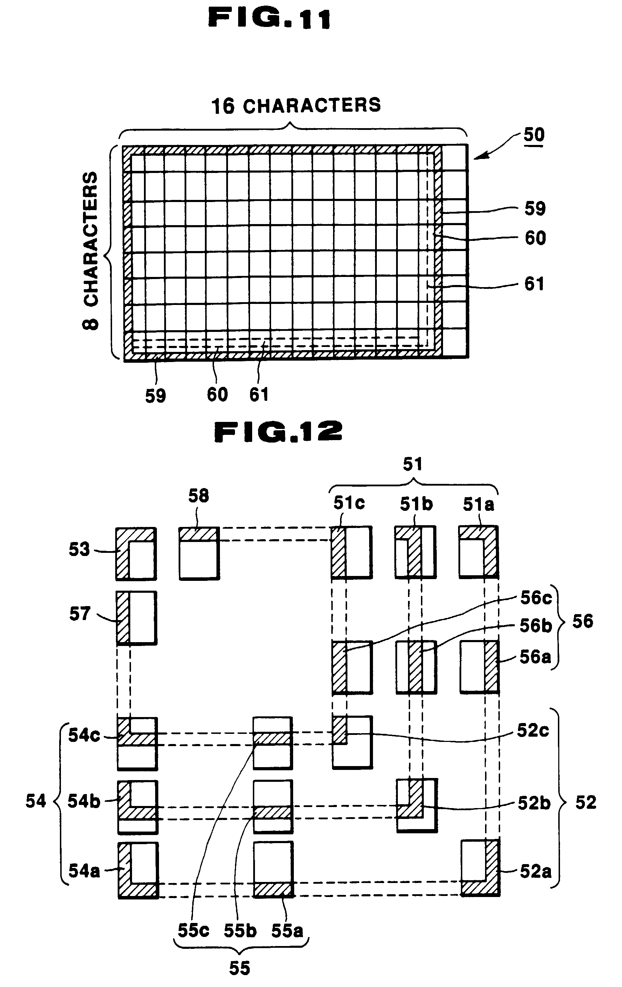

Referring to Figures 11 to 16, more specific examples of character patterns stored in ROMs in the character generator 30 and the display form are explained.

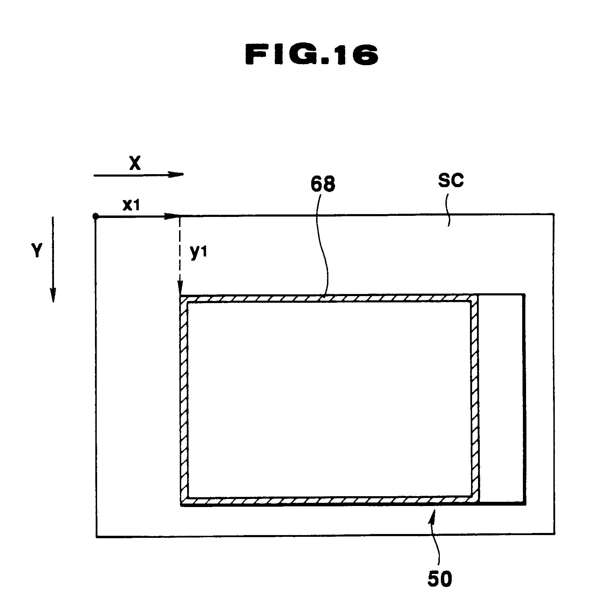

Figure 11 illustrates a specific example of the character display table. When a mixed signal with the character display signal is displayed, a display table 50 consisting of an array of 128 characters formed by sixteen characters in the horizontal direction and eight characters in the vertical direction is displayed within a predetermined size region on the display SC shown in Figure 16. Character patterns, such as alphabetical letters or numerals, are segmentially arranged at predetermined positions on the character display table 50 for displaying various functions of the video reading device.

In the present example, a character pattern 51 forming the upper right corner of the video reading range, a character pattern 52 forming its lower right corner a character 53 forming its upper left corner, a character pattern 54 forming its lower left corner, a character pattern 55 forming its bottom side, a character pattern 56 forming its right side, a character pattern 57 forming its left side and a character pattern 58 forming its upper side, as shown in Figure 12, are stored in the character ROM of the character generator 30, besides the general character patterns, such as the alphabetical letters. These character patterns are read and combined to form and display the reading range determining frame as shown at 59, 60 and 61 in Figure 11.

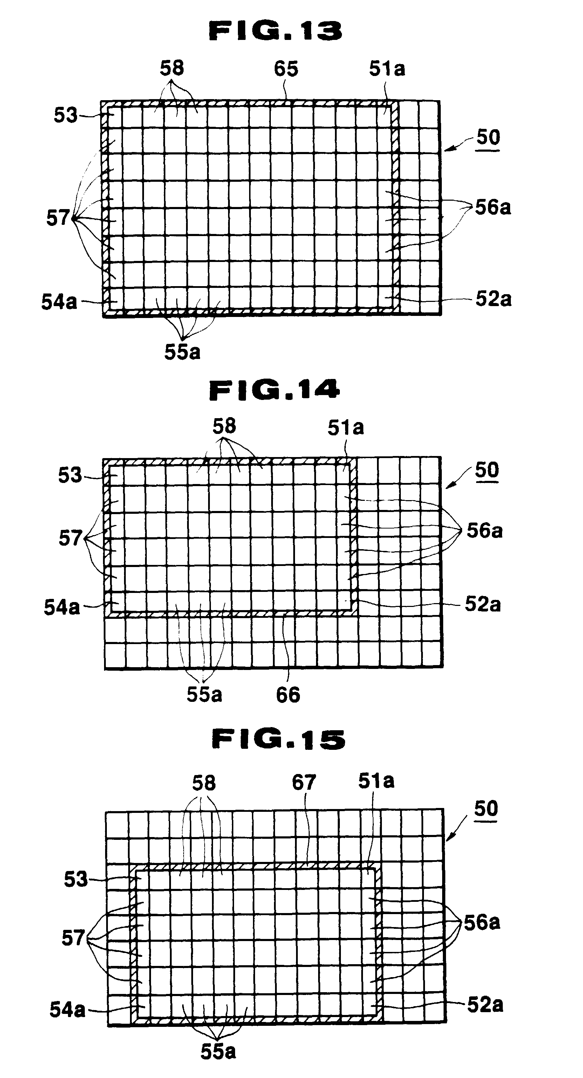

The four corners of the reading range determining frame 59 shown in Figure 11 may be displayed by reading the character patterns 51a, 52a, 54a and 53 shown in Figure 12, while its for sides may be displayed by rereading necessary lengths from character patterns 57, 58, 56a and 55a. When using these eight kinds of character pattern, the frame display position and size may be changed by modifying the allocating position in the character display table 50, as shown in Figures 13 to 15. Thus, by reading the eight kinds of character patterns 53, 57, 54a, 55a, 52a, 56a, 51a and 58 in Figure 12, so that these patterns are arranged at predetermined positions of the display table 50, and by allocating the character patterns for displaying the right sides 51a, 56a and 52a with shift of two characters to the left on the display table 50 and the character patterns for displaying the bottom side with a shift of two characters up, with the reading range determining range 65 displayed as shown in Figure 13, it becomes possible to display the small size reading range determining frame 66 as shown in Figure 14. On the other hand, by displaying the frame 66 shown in Figure 6 as a whole to the left by one character and down by two characters, the reading range determining frame 67 shifted as shown in Figure 15 may be displayed.

While the above is concerned with character-by-character shifting and change in size or format, the number of kinds of the character patterns for frame display may be increased to realize finer frame format modification and movements. Thus the reading range determining frames 59 to 61 are able to display the four corners by reading character patterns 51b, 52b, 54b and 53 shown in Figure 12, and to display four sides by reading necessary lengths of the patterns 57, 58, 56b and 55b. On the other hand, the reading range determining frame 61 is able to display four corners by character patterns 51c, 52c, 54c and 53 and to display four sides by the patterns 57, 58, 56c and 55c. By combining different character patterns in this manner, the reading range determining frame of desired size can be formed and displayed. Movement of the reading range determining frame can be realized more finely than in the case of character-by-character movements.

The reading range determining frame may also be moved by changing the display position of the character display table 50. That is, if the display position of the character display table 50, for example, the upper left X and Y coordinates x1 and y1 on the display SC of Figure 16, can be changed by the character generator 30, the frame 68 displayed in the table 50 may be moved concomitantly by changing the position of the character display table 50 on the display SC.

In the present embodiment, a character pattern of twelve horizontal dots and sixteen vertical dots is used and the character display table 50 of 192 dots by sixteen horizontal characters and 256 dots by eight vertical characters is formed. Each horizontal dot of the character is read by a 5 kHz clock signal and each dot along the vertical direction corresponds to each scanning line of the display SC of the CRT monitor 14. Therefore, the display SC as a whole is formed by about 250 dots (5 kHz clock signal) in the horizontal direction and by 480 dots in the vertical direction (effective display screen of 480 lines) and the display table 50 of 152 dots x 256 dots is movably displayed on the display SC.

With the above described embodiment, the frame for determining the re-reading range is displayed in superposition during the time when the overall surface of the picture original is read and displayed. If the frame is moved or modified in size and the reading range is determined under visual inspection to effect re-reading the portion in the frame in the video original is displayed to an enlarged scale on the overall display SC. This technique is known as trimming.

Considering that the line sensor LS has 1728 photocells, and the resolution in the Y or vertical direction of the ordinary CRT monitor display SC is about 480, the photocells may be put out of use at a rate of one out of four cells when a full format (A4) original is to be displayed on the display screen. When the 1/4 size area is to be read and displayed to an enlarged scale, it may be read by the same line sensor LS with sufficient resolution. Taking into account the deterioration in resolution in case of displaying only a partial region of video data read from the original and stored in the video memory, an obvious advantage can be derived from re-reading the video original itself.

The standard reading range of the image reading device of the present embodiment is the A4 format placed transversely. When it is desired to display the picture original, which is vertically elongated and placed horizontally or transversely in the vertical position, the upper half of the A4 original is displayed fully with a scrolling function. A function is added in which, when a UP key of an UP/DOWN key of the key input device is actuated in this state, an upward scrolling is performed with 2-line (2H) step movement. In this scrolling function, the DOWN key in the initial state is not accepted but both the UP and DOWN keys are accepted after scrolling.

The illustration of these functions are displayed on the screen by the character generator 30 under control from the CPU 22. When trimming is performed after trimming, a display "TRIMMING ONCE ONLY" is made to indicate that re-trimming is not feasible. There are also displayed "NO TRIMMING IN SCROLL MODE" indicating that trimming is not feasible during scroll mode, and error messages such as no trimming during superimposition, format cannot be changed during scroll mode, superimposition is not feasible during scroll mode, trimming frame colour cannot be changed, or no trimming after reading the minimum format original. Display of the reading format, such as "size n" at the time of changing the reading range format, is also made by character generator 30 under control from the CPU 22.

With the above described embodiment, the reading range determining frame is displayed on the display screen SC, such as a CRT monitor, the reading range for the picture original GD may be easily and positively determined as the position or enlargement ratio of the frame F is checked. The character generator 30 for function display is used as the arrangement for frame display so that the display frame can be formed under control from the CPU 22 by a software technique, that is without addition of hardware components.

Various modifications are possible. For example, the frame can be displayed in desired tints, such as white or black tints.

## Claims

1. A scanning apparatus for reading an image, the apparatus comprising;
a scanning sensor (LS) for reading an image of an original (GD);
an analogue-to-digital converter (6) for converting said image from analogue image data into digital image data;
memory means (8) for storing said digital image data;
a memory controller (10) for generating address signals for storing said digital image data in said memory means (8);
control means (21, 22), including said memory controller (10), for controlling the reading frequency from said memory means (8) so as to be equal to a scanning frequency of a television signal;
a digital-to-analogue converter (11) for converting said digital image data into an original image signal for display as a television image; a frame display signal generator (30) for generating a frame display signal;
mixing means (12) for mixing said original image signal with said frame display signal;
output terminal means (13) for outputting the mixed signal from said mixing means (12) as a display image signal; and
user input means (23) for inputting data to said control means (21,22),
characterised in that:
said frame display signal generator (30) is responsive to position and enlargement ratio data input from said user input means (23) to said control means (21,22) for generating a said frame display signal framing a user selected reading range of said original (GD); and
said control means (21, 22) is responsive to said position and enlargement ratio data to control driving means (9) for driving said scanning sensor (LS) to rescan the thus selected reading range of said original (GD) to generate a new image corresponding to said selected reading range;
whereby said rescanned area of said original image signal framed by said frame display signal is magnified and displayed on the whole of the display area (SC) of display means (14).

2. Apparatus according to claim 1, wherein said frame display signal generator (30) comprises a character generator (30) and said frame display signal comprises a plurality of character patterns.

3. Apparatus according to claim 1 or claim 2, wherein said user input means comprises a control keyboard (23) including a frame area positioning key for inputting said position data.

4. Apparatus according to claim 3, wherein said control keyboard (23) includes a frame area magnifying key for inputting said enlargement ratio data.

5. Apparatus according to any one of claims 1 to 4, wherein said memory controller (10) is controlled by a system controller (21) so as to read out said image from said memory means (8) corresponding to an odd-numbered field of a television signal in a first period, and an even-numbered field of a television signal in a second period, said first and second periods being generated repeatedly in accordance with an interlace form of television signal.

6. Apparatus according to any one of the preceding claims, wherein said scanning sensor is a line sensor (LS), said driving means comprising a timing signal generator (9) for controlling said line sensor (LS).

7. Apparatus according to claim 6, wherein said timing signal generator (9) is operative to control said line sensor (LS) to rescan said original within a reading range corresponding to said framed area.

## Patentansprüche

1. Abtast-Gerät zum Lesen eines Bildes, welches Gerät umfaßt:
einen Abtastsensor (LS) zum Lesen eines Bildes eines Originals (GD),
einen Analog/Digital-Wandler (6) zum Umsetzen von das Bild repräsentierenden analogen Bilddaten in digitale Bilddaten,
ein Speichermittel (8) zum Speichern der digitalen Bilddaten,
eine Speicher-Steuereinrichtung (10) zum Erzeugen von Adreßsignalen zum Speichern der digitalen Bilddaten in dem Speichermittel (8),
Steuermittel (21, 22), welche die Speicher-Steuereinrichtung (10) enthalten, zum Einstellen der Lesefrequenz aus dem Speichermittel (8) derart, daß sie gleich einer Abtastfrequenz eines Fernsehsignals ist,
einen Digital/Analog-Wandler (11) zum Umsetzen der digitalen Bilddaten in ein Originalbildsignal zur Anzeige als ein Fernsehbild,
einen Teilbildanzeigesignal-Generator (30) zum Erzeugen eines Teilbildanzeigesignals,
ein Mischmittel (12) zum Mischen des Originalbildsignals mit dem Teilbildanzeigesignal,
Ausgangsanschlußmittel (13) zum Ausgeben des gemischten Signals aus dem Mischmittel (12) als ein Anzeigebildsignal und
ein Benutzer-Eingabemittel (23) zum Eingeben von Daten in die Steuermittel (21, 22),
dadurch **gekennzeichnet,** daß
der Teilbildanzeigesignal-Generator (30) auf Positions- und Vergrößerungsverhältnis-Daten, die über das Benutzer-Eingabemittel (23) in die Steuermittel (21, 22) eingegeben sind, zum Erzeugen des Teilbildanzeigesignals anspricht, welches einen vom Benutzer ausgewählten Lesebereich des Originals (GD) höhen- und breitenmäßig einstellt, und
die Steuermittel (21, 22) auf die Positions- und Vergrößerungsverhältnis-Daten zum Steuern eines Treibermittels (9) zum Treiben des Abtastsensor (LS) ansprechen, um den auf diese Weise ausgewählten Lesebereich des Originals (GD) nochmals abzutasten, um ein neues Bild zu erzeugen, das dem ausgewählten Lesebereich entspricht,
wodurch der nochmals abgetastete Bereich des Originalbildsignals, welcher mittels des Teilbildanzeigesignals höhen- und breitenmäßig eingestellt ist, vergrössert und auf der gesamten Anzeigefläche (SC) des Anzeigemittels (14) angezeigt wird.

2. Gerät nach Anspruch 1, bei dem der Teilbildanzeigesignal-Generator (30) aus einem Zeichengenerator (30) besteht und das Teilbildanzeigesignal eine Vielzahl von Zeichenmustern enthält.

3. Gerät nach Anspruch 1 oder 2, bei dem das Benutzer-Eingabemittel aus einer Steuertastatur (23) besteht, die eine Teilbildbereich-Positionierungstaste zum Eingeben der Positions-Daten enthält.

4. Gerät nach Anspruch 3, bei dem die Steuertastatur (23) eine Teilbildbereich-Vergrößerungstaste zum Eingeben der Vergrößerungsverhältnis-Daten enthält.

5. Gerät nach einem der Ansprüche 1 bis 4, bei dem die Speicher-Steuereinrichtung (10) mittels einer System-Steuereinrichtung (21) derart gesteuert wird, daß das Bild aus dem Speichermittel (8) entsprechend einem ungeradzahligen Halbbild eines Fernsehsignals in einer ersten Periode und einem geradzahliges Halbbild eines Fernsehsignals in einer zweiten Periode ausgelesen wird, wobei die ersten und zweiten Perioden wiederholt in Übereinstimmung mit einer Verschachtelungsform des Fernsehsignals erzeugt werden.

6. Gerät nach einem der vorhergehenden Ansprüche, bei dem der Abtastsensor ein Zeilensensor (LS) ist, wobei das Treibermittel aus einem Zeitschaltsignal-Generator (9) zum Steuern des Zeilensensors (LS) besteht.

7. Gerät nach Anspruch 6, bei dem der Zeitschaltsignal-Generator (9) betreibbar ist, um den Zeilensensor (LS) derart zu steuern, daß das Original innerhalb eines Lesebereichs nochmals abgetastet wird, der dem höhen- und breitenmäßig eingestellten Bereich entspricht.

## Revendications

1. Appareil de balayage pour lire une image, l'appareil comprenant :
un capteur de balayage (LS) pour lire une image d'un original (GD) ;
un convertisseur analogique-numérique (6) pour convertir ladite image de la forme données d'image analogiques à la forme données d'image numériques ;
un moyen de mémoire (8) pour stocker lesdites données d'image numériques ;
un contrôleur de mémoire (10) pour générer des signaux d'adresse pour stocker lesdites données d'image numériques dans ledit moyen de mémoire (8) ;
un moyen de commande (21, 22), incluant ledit contrôleur de mémoire (10), pour commander la fréquence de lecture dans ledit moyen de mémoire (8) de manière à ce qu'elle soit égale à une fréquence de balayage d'un signal de télévision ;
un convertisseur numérique-analogique (11) pour convertir lesdites données d'image numériques en un signal d'image d'original en vue d'un affichage en tant qu'image de télévision ;
un générateur de signal d'affichage de cadre (30) pour générer un signal d'affichage de cadre ;
un moyen de mélange (12) pour mélanger ledit signal d'image d'original avec ledit signal d'affichage de cadre ;
un moyen de borne de sortie (13) pour émettre en sortie le signal mélangé provenant dudit moyen de mélange (12) en tant que signal d'image d'affichage ; et
un moyen d'entrée utilisateur (23) pour entrer des données sur ledit moyen de commande (21, 22),
caractérisé en ce que :
ledit générateur de signal d'affichage de cadre (30) est sensible à des données de position et de rapport d'agrandissement entrées depuis ledit moyen d'entrée utilisateur (23) sur ledit moyen de commande (21, 22) pour générer un dit signal d'affichage de cadre encadrant une plage de lecture sélectionnée par utilisateur dudit original (GD) ; et
ledit moyen de commande (21, 22) est sensible auxdites données de position et de rapport d'agrandissement pour commander un moyen de pilotage (9) pour piloter ledit capteur de balayage (LS) afin de rebalayer la plage de lecture ainsi sélectionnée dudit original (GD) afin de générer une nouvelle image correspondant à ladite plage de lecture sélectionnée,
et ainsi, ladite zone rebalayée dudit signal d'image d'original encadrée par ledit signal d'affichage de cadre est agrandie et affichée sur la totalité de la zone d'affichage (SC) d'un moyen d'affichage (14).

2. Appareil selon la revendication 1, dans lequel ledit générateur de signal d'affichage de cadre (30) comprend un générateur de caractères (30) et ledit signal d'affichage de cadre comprend une pluralité de motifs de caractères.

3. Appareil selon la revendication 1 ou 2, dans lequel ledit moyen d'entrée utilisateur comprend un clavier de commande (23) incluant une touche de positionnement de zone de cadre pour entrer lesdites données de position.

4. Appareil selon la revendication 3, dans lequel ledit clavier de commande (23) inclut une touche d'agrandissement de zone de cadre pour entrer lesdites données de rapport d'agrandissement.

5. Appareil selon l'une quelconque des revendications 1 à 4, dans lequel ledit contrôleur de mémoire (10) est commandé par un contrôleur système (21) de manière à lire ladite image dans ledit moyen de mémoire (8) correspondant à une trame de numéro impair d'un signal de télévision dans une première période et à une trame de numéro pair d'un signal de télévision dans une seconde période, lesdites première et seconde périodes étant générées de manière répétée conformément à une forme d'entrelaçage d'un signal de télévision.

6. Appareil selon l'une quelconque des revendications précédentes, dans lequel ledit capteur de balayage est un capteur en ligne (LS), ledit moyen de pilotage comprenant un générateur de signal de cadencement (9) pour commander ledit capteur en ligne (LS).

7. Appareil selon la revendication 6, dans lequel ledit générateur de signal de cadencement (9) fonctionne pour commander ledit capteur en ligne (LS) pour rebalayer ledit original dans une plage de lecture correspondant à ladite zone encadrée.
